# EUROPEAN PATENT SPECIFICATION

(11) **EP 4 229 316 B1**
(45) Date of publication and mention of the grant of the patent: **10.07.2024**
(21) Application number: 20799763.6
(22) Date of filing: 14.10.2020
(51) Int. Cl.: F16F 15/28, F16C 3/20, F16C 3/10

(54) **A CRANKSHAFT OF A RECIPROCATING INTERNAL COMBUSTION PISTON ENGINE WITH A COUNTERWEIGHT AND AN ENGINE INCORPORATING SUCH A CRANKSHAFT, AND A METHOD FOR PROVIDING SUCH A COUNTERWEIGHT ON SUCH A CRANKSHAFT**
KURBELWELLE FÜR EINEN HUBKOLBENMOTOR MIT EINEM GEGENGEWICHT UND MOTOR MIT EINER SOLCHEN KURBELWELLE UND MONTAGEVERFAHREN EINES SOLCHEN GEGENGEWICHTS AN EINE SOLCHE KURBELWELLE
VILEBREQUIN D'UN MOTEUR À COMBUSTION INTERNE À PISTON ALTERNATIF AVEC UN CONTREPOIDS ET MOTEUR INCORPORANT UN TEL VILEBREQUIN, ET PROCÉDÉ DE MONTAGE D'UN TEL CONTREPOIDS SUR UN TEL VILEBREQUIN

(43) Date of publication of application: 23.08.2023
(73) Proprietor: Wärtsilä Finland Oy, 65170 Vaasa (FI)
(72) Inventor: FRONDELIUS, Tero, 65170 Vaasa (FI); HALLA-AHO, Pasi, 65170 Vaasa (FI)
(74) Representative: Boco IP Oy Ab
(86) International application number: PCT/FI2020/050680
(87) International publication number: WO 2022/079342

(56) References cited:
- EP-A1- 0 345 424
- CN-U- 209 228 943
- JP-U- S53 133 905
- US-A1- 2020 011 397

## Description

### FIELD OF THE DISCLOSURE

The present disclosure relates to crankshafts of reciprocating internal combustion piston engines, and more particularly to such crankshafts equipped with a vibration dampening counterweight. The present disclosure further concerns internal combustion piston engines equipped with such crankshafts.

### BACKGROUND OF THE DISCLOSURE

In reciprocating internal combustion engines, the main purpose of a crankshaft counterweight is to balance the weight distribution of the rotating masses, and thereby reduce vibration. Typically, this is carried out by providing portions of increased mass on the crankshaft axially adjacent to the crank pin. Alternatively, also separate counterweight attached to the crankshaft have been provided. In general terms, it is desirable to have achieve a density of the counterweight as high as possible, so as to minimize the space occupied by said counterweights. For example, tungsten inserts have been used in conventional counterweight due to the high density of tungsten. The use of tungsten, however, is restricted by the associated material costs

Additionally, the reciprocating nature of piston engines causes rotational vibration of the counterweight itself, as the rotational forces exerted on the crankshaft by the piston are not constant. For example, US patent 6026776 A discloses a counterweight, in which high-density inserts surrounded by an energy absorbing medium are provided in in openings. This kind of an arrangement is intended to absorb and dampen such rotational vibrations, but results in a relatively complex structure of the counterweight.

Another material known to be used in the inserts of counterweights is lead, which has a relatively high density (although less than that of tungsten), exhibits better vibration dampening characteristics, and is regarded as a more cost-efficient material as compared to tungsten. However, the use of lead is discouraged by the toxicity thereof.

For example, document EP 0345424 A1 discloses the use of lead inserts. Publications JP S53 133905 U and CN 209 228 943 U disclose counterweights.

### BRIEF DESCRIPTION OF THE DISCLOSURE

An object of the present disclosure is to provide a crankshaft of a reciprocating internal combustion piston engine with a counterweight comprising a high density insert having vibration dampening characteristics, while minimizing the risk of contamination from the insert or the loss thereof. It is a further object of the present disclosure to provide a reciprocating internal combustion piston engine provided with such crankshaft and a method for manufacturing such a counterweight.

The object of the disclosure is achieved by the crankshaft, engine anc methods which are characterized by what is stated in the respective independent claims. The preferred embodiments of the disclosure are disclosed in the dependent claims. The disclosure is based on the idea of providing the body of the counterweight as a one-piece, monolithic structure defining a cavity, in which the insert is housed.

According to the invention, the cavity has a single opening towards a side at which the counterweight is attachable to a crankshaft, through which the insert is cast into the cavity.

An advantage of the disclosure is that that the monolithic body structure reduces the risk contamination from the insert due to of breakage of the body, while the positioning of the opening results in that centrifugal forces acting on the insert during operation of an associated engine ensure that the insert maintains its position within the cavity and does not strive to drift away from the cavity. Consequently, the use of vibration dampening insert materials, such as lead, is enabled, while contamination risk from the insert is reduced. Also, other materials, such as silver, bismuth, copper, tin or depleted uranium may be with less risk of contamination and/or loss of said insert material.

According to a first aspect of the present disclosure, a crankshaft of a reciprocating internal combustion piston engine is provided with a counterweight.

The crankshaft comprises a counterweight having a body with a proximal side at which the counterweight is attached to the crankshaft, and a freely extending distal side opposite to the proximal side, wherein the body comprises a cavity housing a solid insert, and wherein the body is of a monolithic structure defining the cavity, and wherein the cavity has a single opening towards the proximal side, through which opening the solid insert has been introduced into the cavity by casting, wherein a mating surface of the crankshaft, at which the counterweight is attached, covers the opening.

In an embodiment of the first aspect according to the present disclosure, the opening of the cavity is closed by a lid. Most suitably, the lid is welded onto the body, thereby hermetically sealing the cavity.

In an embodiment of the first aspect according to the present disclosure, the body is formed of a single piece. Preferably, but not necessarily, the cavity is then subsequently machined onto the body.

For example, the body may be formed of a cast material, i.e., by casting. Particularly, the body may be formed e.g. from cast iron, although the use of other materials is foreseeable. The cavity may then be formed on to the body either in connection with casting or by subsequently machining.

Alternatively, the body may be formed of a suitable blank by machining a desired form onto the blank. The cavity may then be machined either in connection of with the machining the form of the body, or as a separate machining step.--

In an embodiment of the first aspect according to the present disclosure, the body comprises a through-hole extending between the proximal side and a distal side of the body. Such a through-hole is configured for receiving a fixing element therethrough so as to enable fixing the counterweight to a crankshaft.

Moreover, such a through-hole is most suitable spaced apart from the cavity. Particularly, the through-hole may be spaced apart from the cavity in a direction transverse to the radial direction (i.e., the direction running between the proximal side and the distal side). That is, the through-hole resides on a portion of the body at which a cavity is not exhibited.

In an embodiment of the first aspect according to the present disclosure, the body comprises a plurality of cavities and the counterweight comprises a plurality of inserts received in the plurality of cavities, respectively.

Preferably, but not necessarily, if a through-hole and multiple cavities are present, as discussed above, the through-hole resides between adjacent cavities.

In an embodiment of the first aspect according to the present disclosure, the body comprises a plurality of through-holes such that a cavity and a respective insert received in the cavity resides between adjacent trough-holes.

It should be noted that the first aspect of the present disclosure encompasses any combination of two or more embodiments, or variants thereof, as discussed above.

In an embodiment according to the first aspect of the present disclosure, the counterweight is a counterweight having a body with a through-hole, as discussed above in connection with the first aspect of the present disclosure. Moreover, the counterweight is attached to the crankshaft with a fixing element extending through the through-hole.

According to a second aspect of the present disclosure, a reciprocating internal combustion piston engine comprising the crankshaft according to any of the first aspect of the disclosure, is provided.

According to a third aspect of the present disclosure a method for manufacturing a counterweight for a crankshaft of a reciprocating internal combustion piston engine is provided.

The method comprises the steps of:
- providing a crankshaft;
- providing a body of the counterweight, said body having a proximal side at which the counterweight is attachable to a crankshaft, and a freely extending distal side opposite to the proximal side, wherein the body is provided as a monolithic structure defining the cavity, such that the cavity has an opening towards the proximal side;
- providing a cavity on the body;
- providing a solid insert within the cavity, said solid insert being introduced into the cavity through the opening by casting, and attaching the counterweight to the crankshaft at the proximal end of the counterweight's body, the opening being covered by a mating surface of the crankshaft at which the counterweight is attached.

Most suitably, the insert is of a high-density material, such as the materials listed above.

In an embodiment of the third aspect according to the present disclosure, the method further comprises a step of closing the opening with a lid, subsequent to casting the insert. Most suitably, the such a lid may be welded over the opening, so as to hermetically seal the cavity.

In an embodiment of the third aspect according to the present disclosure, the body is formed of a single piece. Preferably, but not necessarily, the cavity is then subsequently machined onto the body.

For example, the body may be formed of a cast material, i.e., by casting. Particularly, the body may be formed e.g. from cast iron, although the use of other materials is foreseeable. The cavity may then be formed on to the body either in connection with casting or by subsequently machining.

Alternatively, the body may be formed of a suitable blank by machining a desired form onto the blank. The cavity may then be machined either in connection of with the machining the form of the body, or as a separate machining step.

It should be noted that the third aspect of the present disclosure encompasses any combination of two or more embodiments, or variants thereof, as discussed above.

### BRIEF DESCRIPTION OF THE DRAWINGS

In the following the disclosure will be described in greater detail by means of preferred embodiments with reference to the accompanying drawings, in which

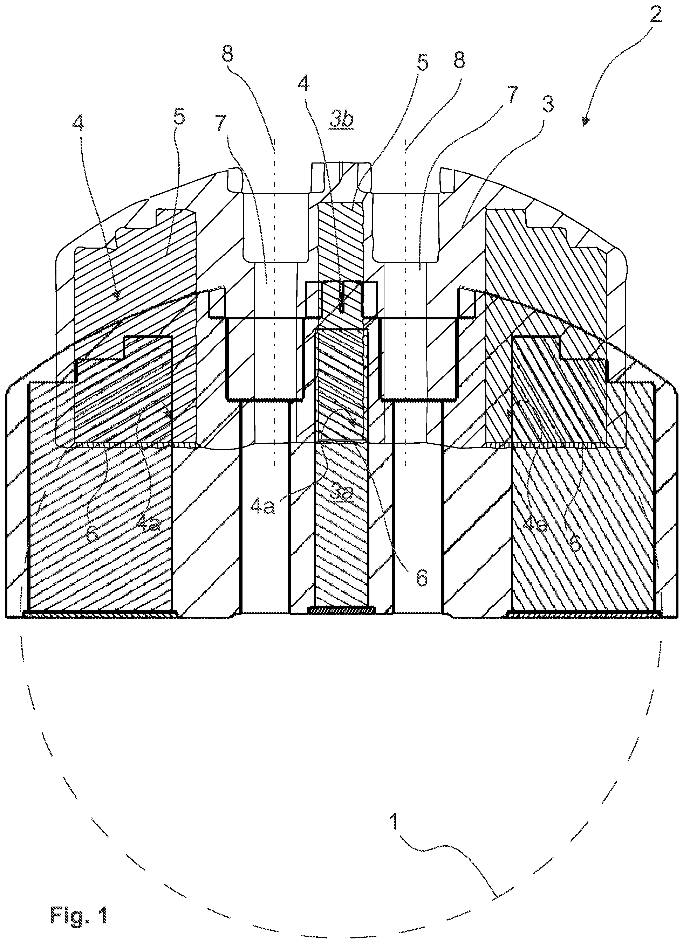

Fig. 1 schematically illustrates a cut view of a crankshaft equipped with a counterweight according to an embodiment of the present disclosure.

### DETAILED DESCRIPTION OF THE DISCLOSURE

The cut view of Fig. 1 is illustrated along an axial direction of a crankshaft 1 to which the counterweight 2 is attachable. That is, the view of Fig. 1 is cut along a radial plane transverse to the axial direction of a crankshaft 1.

Particularly, the counterweight 2 has a monolithic body 3. That is, the body 3 has a one-piece structure. Furthermore, the body 3 has a proximal side at which it is attached to the crankshaft 1, and a distal side 3b facing away from the crankshaft.

In the embodiment of Fig. 1, three cavities 4 are provided on the body, extending between the proximal side 3a and distal sides 3b. The cavities 4 have respective openings 4a towards the proximal side 3a. That is, the cavities open towards the crankshaft, when attached to it. Furthermore, it should be noted that the cavities 4 have no other openings Each opening 4a is closed by a lid 6, thus sealing the inserts 5 in their respective cavities. Moreover, in the embodiment of Fig. 1, two through holes 7 are provided on the counterweight, extending through the body 3 between the proximal and distal sides 3a, 3b. Particularly, the through holes 7 are configured for receiving a fixing element 7 for attaching the counter weight to the crankshaft 1.

Notably, the through holes 7 are space apart from the cavities 4, i.e., the through holes 7 reside at portion of the body 3 at which cavities 4 are not present.

In the particular configuration of Fig. 1 the through holes 7 and cavities are arranged such that the through holes 7 reside between adjacent cavities 4, and one of the cavities 4 resides between adjacent through holes 7. However, it is apparent to the skilled person, that other configurations are possible within the scope of the appended claims.

## Claims

1. A crankshaft (1) for a reciprocating internal combustion piston engine, comprising a counterweight (2) having a body (3) with a proximal side (3a) at which the counterweight (2) is attached to the crankshaft (1), and a freely extending distal (3b) side opposite to the proximal side,
wherein the body comprises a cavity (4) housing a solid insert (5), and
wherein the body (3) is of a monolithic structure defining the cavity (4), and
wherein the cavity (4) has a single opening (4a) towards the proximal side (3a), through which opening (4a) the solid insert (5) has been introduced into the cavity (4) by casting,
**characterized in that** a mating surface of the crankshaft (1), at which the counterweight (2) is attached, covers the opening (4a).

2. The crankshaft (1) according to Claim 1, **characterized in that** the opening (4a) is closed by a lid (6), the lid (6) being preferably welded onto the body (2).

3. The crankshaft (1) according to any of the preceding Claims 1-2, **characterized in that** the body (3) is formed of a single piece, the cavity (4) being preferably subsequently machined onto the body (3).

4. The crankshaft (1) according to Claims 1-2, **characterized by** the body being formed of cast material.

5. The crankshaft (1) according to any of the preceding Claims 1-4, **characterized in that** the body comprises a through-hole (7) extending between the proximal side (3a) and a distal side (3b) of the body, wherein the through-hole (7) is configured for receiving a fixing element (8) therethrough for fixing the counterweight (2) to a crankshaft (1).

6. The crankshaft (1) according to Claim 5, **characterized in that** the through-hole (7) is spaced apart from the cavity (4).

7. The crankshaft (1) according to any of the preceding Claims 1-6, **characterized in that** the body (3) comprises a plurality of cavities (4) and the counterweight (2) comprises a plurality of inserts (5) received in the plurality of cavities (4), respectively,

8. The crankshaft (1) according to Claim 7, **characterized in that** the through-hole (7) resides between adjacent cavities (4).

9. The crankshaft (1) according to Claim 5-8, **characterized in that** the body comprises a plurality of through-holes (7) such that a cavity (4) and a respective insert (5) received in the cavity (4) resides between adjacent trough-holes (7).

10. The crankshaft (1) according to any of the preceding Claims 5-9, **characterized in that**
the counterweight (2) is attached to the crankshaft (1) with a fixing element (8) extending through the through-hole (7).

11. A reciprocating internal combustion piston engine, **characterized by** comprising the crankshaft according to any of the preceding Claims 1-10.

12. A method for providing a counterweight (2) on a crankshaft (1) for a reciprocating internal combustion piston engine, comprising the method steps of:
providing a crankshaft (1);
providing a body (3) of the counterweight (2), said body (3) having a proximal side (3a) at which the counterweight is attachable to a crankshaft, and a freely extending distal side (3b) opposite to the proximal side, wherein the body (3) is provided as a monolithic structure defining the cavity (4), such that the cavity (4) has an opening (4a) towards the proximal side (3a);
providing a cavity (4) on the body (2);
providing a solid insert (5) within the cavity, said solid insert being introduced into the cavity (4) through the opening (4a) by casting, and
attaching the counterweight (2) to the crankshaft (1) at the proximal end (3a) of the counterweight's body (3),
**characterized by** the opening (4a) being covered by a mating surface of the crankshaft (1) at which the counterweight (2) is attached.

13. The method according to Claim 12, **characterized by** further comprising a method step of closing the opening (4a) with a lid (6), subsequent to casting the insert (4).

14. The method according to Claim 12, **characterized in that** the body (3) is formed of a single piece and the cavity (4) is provided onto the body (3) preferably by subsequently machining.

15. The method according to Claim 12, **characterized by** the body being formed by casting.

## Patentansprüche

1. Kurbelwelle (1) für eine Hubkolben-Brennkraftmaschine, umfassend ein Gegengewicht (2) mit einem Körper (3) mit einer nahen Seite (3a), auf der das Gegengewicht (2) an der Kurbelwelle (1) befestigt ist, und einer sich frei erstreckenden fernen (3b) Seite entgegengesetzt zur nahen Seite,
wobei der Körper einen Hohlraum (4) umfasst, der einen massiven Einsatz (5) aufnimmt, und
wobei der Körper (3) aus einer den Hohlraum (4) definierenden monolithischen Struktur besteht, und
wobei der Hohlraum (4) zur nahen Seite (3a) hin eine einzelne Öffnung (4a) aufweist, durch welche Öffnung (4a) hindurch der massive Einsatz (5) gusstechnisch in den Hohlraum (4) eingebracht wurde,
**gekennzeichnet dadurch, dass** eine passende Fläche der Kurbelwelle (1), an der das Gegengewicht (2) befestigt ist, die Öffnung (4a) abdeckt.

2. Kurbelwelle (1) nach Anspruch 1, **gekennzeichnet dadurch, dass** die Öffnung (4a) durch einen Deckel (6) geschlossen ist, wobei der Deckel (6) vorzugsweise an den Körper (2) angeschweißt ist.

3. Kurbelwelle (1) nach einem der vorhergehenden Ansprüche 1 bis 2, **gekennzeichnet dadurch, dass** der Körper (3) aus einem einzigen Stück ausgebildet ist, wobei der Hohlraum (4) vorzugsweise anschließend zerspanungstechnisch in den Körper (3) eingearbeitet wird.

4. Kurbelwelle (1) nach Anspruch 1 bis 2, **gekennzeichnet dadurch, dass** der Körper aus Gussmaterial ausgebildet ist.

5. Kurbelwelle (1) nach einem der vorhergehenden Ansprüche 1 bis 4, **gekennzeichnet dadurch, dass** der Körper ein Durchgangsloch (7) umfasst, das sich zwischen der nahen Seite (3a) und einer fernen Seite (3b) des Körpers erstreckt, wobei das Durchgangsloch (7) so ausgelegt ist, dass es ein hindurchgehendes Befestigungselement (8) zum Befestigen des Gegengewichts (2) an einer Kurbelwelle (1) aufnimmt.

6. Kurbelwelle (1) nach Anspruch 5, **gekennzeichnet dadurch, dass** das Durchgangsloch (7) zum Hohlraum (4) beabstandet ist.

7. Kurbelwelle (1) nach einem der vorhergehenden Ansprüche 1 bis 6, **gekennzeichnet dadurch, dass** der Körper (3) eine Mehrzahl von Hohlräumen (4) umfasst und das Gegengewicht (2) eine Mehrzahl von Einsätzen (5) umfasst, die in der Mehrzahl von Hohlräumen (4) entsprechend aufgenommen werden.

8. Kurbelwelle (1) nach Anspruch 7, **gekennzeichnet dadurch, dass** das Durchgangsloch (7) zwischen benachbarten Hohlräumen (4) liegt.

9. Kurbelwelle (1) nach Anspruch 5 bis 8, **gekennzeichnet dadurch, dass** der Körper eine Mehrzahl von Durchgangslöchern (7) dergestalt umfasst, dass ein Hohlraum (4) und ein im Hohlraum (4) aufgenommener entsprechender Einsatz (5) zwischen benachbarten Durchgangslöchern (7) liegt.

10. Kurbelwelle (1) nach einem der vorhergehenden Ansprüche 5 bis 9, **dadurch gekennzeichnet, dass** das Gegengewicht (2) mit einem durch das Durchgangsloch (7) verlaufenden Befestigungselement (8) an der Kurbelwelle (1) befestigt ist.

11. Hubkolben-Brennkraftmaschine, **gekennzeichnet dadurch, dass** sie die Kurbelwelle nach einem der vorhergehenden Ansprüche 1 bis 10 umfasst.

12. Verfahren zum Bereitstellen eines Gegengewichts (2) an einer Kurbelwelle (1) für eine Hubkolben-Brennkraftmaschine, umfassend die Verfahrensschritte:
Bereitstellen einer Kurbelwelle (1);
Bereitstellen eines Körpers (3) des Gegengewichts (2), wobei der Körper (3) eine nahe Seite (3a), auf der das Gegengewicht an einer Kurbelwelle befestigbar ist, und eine sich frei erstreckende ferne Seite (3b) entgegengesetzt zur nahen Seite aufweist, wobei der Körper (3) als eine den Hohlraum (4) definierende monolithische Struktur dergestalt bereitgestellt wird, dass der Hohlraum (4) zur nahen Seite (3a) hin eine Öffnung (4a) aufweist;
Bereitstellen eines Hohlraums (4) am Körper (2);
Bereitstellen eines massiven Einsatzes (5) im Hohlraum, wobei der massive Einsatz gusstechnisch durch die Öffnung (4a) hindurch in den Hohlraum (4) eingebracht wird, und
Befestigen des Gegengewichts (2) an der Kurbelwelle (1) auf der nahen Seite (3a) des Gegengewicht-Körpers (3),
**gekennzeichnet dadurch, dass** die Öffnung (4a) durch eine passende Fläche der Kurbelwelle (1), an der das Gegengewicht (2) befestigt ist, abgedeckt wird.

13. Verfahren nach Anspruch 12, **gekennzeichnet dadurch, dass** es ferner einen Verfahrensschritt umfasst: Verschließen der Öffnung (4a) mit einem Deckel (6) nach dem Gießen des Einsatzes (4).

14. Verfahren nach Anspruch 12, **gekennzeichnet dadurch, dass** der Körper (3) aus einem einzigen Stück ausgebildet ist und der Hohlraum (4) am Körper (3) vorzugsweise durch anschließendes zerspanendes Bearbeiten bereitgestellt wird.

15. Verfahren nach Anspruch 12, **gekennzeichnet dadurch, dass** der Körper gusstechnisch hergestellt wird.

## Revendications

1. Vilebrequin (1) pour un moteur à combustion interne à piston alternatif, comprenant un contre-poids (2) comportant un corps (3) avec un côté proximal (1) où le contre-poids (2) est attaché au vilebrequin (1) et un côté distal (3b) à extension libre opposé au côté proximal,
dans lequel le corps comprend une cavité (4) abritant un insert solide (5), et
dans lequel le corps (3) est d'une structure monolithique définissant la cavité (4), et dans lequel la cavité (4) présente une ouverture unique (4) vers le côté proximal (3a), ledit insert solide (5) ayant été introduit par coulage à travers ladite ouverture (4a) dans la cavité (4),
**caractérisé en ce qu'**une surface concordante du vilebrequin (1), où le contre-poids (2) est attaché, recouvre l'ouverture (4a).

2. Vilebrequin (1) selon la revendication 1, **caractérisé en ce que** l'ouverture (4a) est fermée par un couvercle (6), ledit couvercle (6) étant préférablement soudé sur le corps (2).

3. Vilebrequin (1) selon l'une des revendications précédentes 1 à 2, **caractérisé en ce que** le corps (3) est formé d'une seule pièce, ladite cavité (4) étant préférablement usinée ultérieurement sur le corps (3).

4. Vilebrequin (1) selon les revendications 1 à 2, **caractérisé en ce que** le corps est formé d'un matériau coulé.

5. Vilebrequin (1) selon l'une des revendications précédentes 1 à 4, **caractérisé en ce que** le corps comprend un trou de passage (7) qui s'étend entre le côté proximal (3a) et un côté distal (3b) du corps, ledit trou de passage (7) étant configuré pour y accueillir un élément de fixation (8) pour fixer le contre-poids (2) à un vilebrequin (1).

6. Vilebrequin (1) selon la revendication 5, **caractérisé en ce que** le trou de passage (7) est espacé de la cavité (4).

7. Vilebrequin (1) selon l'une des revendications précédentes 1 à 6, **caractérisé en ce que** le corps (3) comprend une pluralité de cavités (4) et le contre-poids (2) comprend une pluralité d'inserts (5) qui sont accueillis dans la pluralité de cavités (4) respectives.

8. Vilebrequin (1) selon la revendication 7, **caractérisé en ce que** le trou de passage (7) est situé entre des cavités (4) adjacentes.

9. Vilebrequin (1) selon les revendications 5 à 8, **caractérisé en ce que** le corps comprend une pluralité de trous de passage (7) de sorte qu'une cavité (4) et un insert respectif (5) abrité par la cavité (4) sont situés entre des trous de passage (7) adjacents.

10. Vilebrequin (1) selon l'une des revendications précédentes 5 à 9, **caractérisé en ce que** le contre-poids (2) est attaché au vilebrequin (1) avec un élément de fixation (8) s'étendant à travers le trou de passage (7).

11. Moteur à combustion interne à piston alternatif, **caractérisé en ce qu'**il comprend le vilebrequin selon l'une des revendications précédentes 1 à 10.

12. Procédé pour fournir un contre-poids (2) sur un vilebrequin (1) pour un moteur à combustion interne à piston alternatif, comprenant les étapes consistant à :
fournir un vilebrequin (1);
fournir un corps (3) du contre-poids (2), ledit corps (3) ayant un côté proximal (3a) où le contre-poids est attachable à un vilebrequin et un côté distal (3b) à extension libre opposé au côté proximal, ledit corps (3) étant fourni comme une structure monolithique définissant la cavité (4) de telle façon que la cavité (4) présente une ouverture (4a) vers le côté proximal (3a);
fournir une cavité (4) sur le corps (2);
fournir un insert solide (5) dans la cavité, ledit insert solide étant introduit par coulage à travers l'ouverture (4a) dans la cavité (4), et
fixer le contre-poids (2) au vilebrequin (1) sur le côté proximal (3a) du corps de contre-poids (3),
**caractérisé en ce que** l'ouverture (4a) est recouverte d'une surface concordante du vilebrequin (1) où le contre-poids (2) est attaché.

13. Procédé selon la revendication 12, **caractérisé en ce qu'**il comprend également une étape consistant à fermer l'ouverture (4a) avec un couvercle (6) après le coulage de l'insert (4).

14. Procédé selon la revendication 12, **caractérisé en ce que** le corps (3) est formé d'une seule pièce et la cavité (4) est fournie sur le corps (3) préférablement par usinage ultérieur.

15. Procédé selon la revendication 12, **caractérisé en ce que** le corps est formé par coulage.
